# EUROPÄISCHE PATENTANMELDUNG

(11) **EP 1 225 675 A1**
(43) Veröffentlichungstag der Anmeldung: **24.07.2002**
(21) Anmeldenummer: 02000151.7
(22) Anmeldetag: 07.01.2002
(51) Int. Cl.: H02J 9/00, H02J 7/00

(54) **Anordnung mit einem elektrischen Ladegerät und einem Mobilteil**

(30) Priorität: 10.01.2001 DE 10100767
(71) Anmelder: Tenovis GmbH & Co. KG, 60326 Frankfurt am Main (DE)
(72) Erfinder: Erdmann, Uwe, 38304 Wolfenbüttel (DE)
(74) Vertreter: Patentanwaltskanzlei WILHELM & BECK

(57) **Zusammenfassung**

Bekannt ist eine Anordnung mit einem elektrischen Ladegerät (3) und einem Mobilteil (11), welches Ladegerät ein an einem Spannungsversorgungsnetz (1) liegendes und über einen Schalter (5) schaltbares Netzteil (7) sowie Ladekontakte (9; 19) aufweist, mit denen das Mobilteil zum Aufladen durch das Ladegerät kontaktierbar ist. Um den Standby-Energieverbrauch zu minimieren, ist vorgesehen, dass der Schalter (5) das Netzteil (7) des Ladegerätes im Ruhezustand primärseitig vom Spannungsversorgungsnetz (1) trennt, und dass das Mobilteil (11) durch das Kontaktieren der Ladekontakte (9; 19) des Ladegerätes den Schalter (5) schließt.

## Beschreibung

Die vorliegende Erfindung betrifft eine Anordnung mit einem elektrischen Ladegerät und einem Mobilteil nach dem Oberbegriff des Patentanspruches 1.

Eine derartige gattungsgemäße Anordnung ist beispielsweise bekannt als schnurloses Telefon CT-COM 413 der Robert Bosch GmbH, wobei das Ladegerät bzw. die Basisstation ein Lade- und Ablagefach sowie u.a. eine Ladekontrollleuchte und einen Lautsprecher aufweist. Die Basisstation wird über ein Steckernetzteil aus dem Wechselstromnetz gespeist. Das Mobilteil trägt einen NiCd-Akkumulator, der durch das Stecken des Mobilteils in das Ladefach der Basisstation bei Bedarf geladen werden kann.

Weiterhin ist aus der Druckschrift DE 44 20 684 A1 eine Schaltungsanordnung für eine mit einer Telefonleitung verbundene Last bekannt. Diese Schaltungsanordnung ermöglicht die Ansteuerung der Last in Abhängigkeit der am Eingang der Schaltungsanordnung anstehenden Signale. Die Anordnung ist dahingehend ausgebildet, dass beim Auftreten eines Klingelsignals funktionssicher die Last eingeschaltet und nach Beendigung einer Informationsübertragung sowie unabhängig von deren Zeitdauer die Abschaltung durchgeführt wird. Als Last kann beispielsweise ein Faxgerät oder ein PC mit integrierter Faxkarte vorgesehen sein. Zur Stromversorgung von auf der Schaltungsanordnung vorgesehenen Bauelementen liegt die Schaltungsanordnung an einer Gleichspannung von insbesondere 12 V.

Aufgabe der vorliegenden Erfindung ist es, eine gattungsgemäße Anordnung mit einem Standby-Energieverbrauch von 0 bereitzustellen.

Erfindungsgemäß ist dies bei einer Anordnung mit einem Ladegerät und einem akkumulatorgespeisten Mobilteil bzw. Und einem Akkumulator mit den Merkmalen des Patentanspruches 1 erreicht. Da im Standby-Betrieb der Anordnung der Schalter des Ladegerätes das Netzteil primärseitig vom Netz trennt, sind die Leerlaufverluste praktisch gleich 0. Weiterhin kann auf eine Zusatzenergieversorgung des Ladegerätes im Standby-Betrieb verzichtet werden, da erfindungsgemäß durch den Kontaktvorgang der Schalter zur Aktivierung des Ladegerätes primärseitig geschlossen wird.

Vorteilhafter Weise kann vorgesehen sein, dass der Schalter als mechanischer Schalter ausgebildet ist, dass die Ladekontakte des Ladegerätes beweglich ausgebildet sind, und dass das Mobilteil beim Kontaktieren durch sein Eigengewicht oder durch das Einschieben in das Ladegerät die Ladekontakte bewegt und dadurch den mechanischen Schalter des Ladegerätes schließt. Die zur Aktivierung des Ladegerätes erforderliche Energie wird also durch das Bewegen bzw. Deformieren der Ladekontakte durch die Bedienperson geliefert. Es ist entsprechend nicht erforderlich, dass der Akkumulator die zum Schließen des Schalters erforderliche Energie bereitstellt.

Gemäß einer bevorzugten Ausführungsform ist vorgesehen, dass das Ladegerät einen Strom- oder Spannungsdetektor aufweist, der das Kontaktieren der Ladekontakte durch das Mobilteil detektiert und durch eine mit dem Stromdetektor verbundene Auswertelogikschaltung den Schalter schließt. Dabei sind aufwendige bewegliche Ladekontakte nicht erforderlich; die Energie zum Aktivieren des Ladegerätes liefert der Akkumulator. Um auch bei tiefentladenen Akkumulatoren den Schalter möglichst sicher schließen zu können, ist zur Steigerung der Empfindlichkeit der Anordnung dem Stromdetektor ein Verstärker nachgeschaltet. Das Ladegerät kann nach dem Ladevorgang automatisch wieder in den Ruhezustand mit Standby-Energieverbrauch 0 geschaltet werden, wenn der Stromdetektor das zeitliche Ende des Ladevorganges insbesondere anhand der Ladekurve detektiert und bei Beendigung des Ladevorganges den Schalter primärseitig öffnet.

Nachfolgend sind anhand schematischer Darstellungen drei Ausführungsbeispiele der erfindungsgemäßen Anordnung beschrieben. Es zeigen:
- Fig. 1: ein Blockschaltbild der Anordnung gemäß dem ersten Ausführungsbeispiel,
- Fig. 2: ein Blockschaltbild der Anordnung gemäß dem zweiten Ausführungsbeispiel, und
- Fig. 3: ein Blockschaltbild der Anordnung gemäß dem dritten Ausführungsbeispiel.

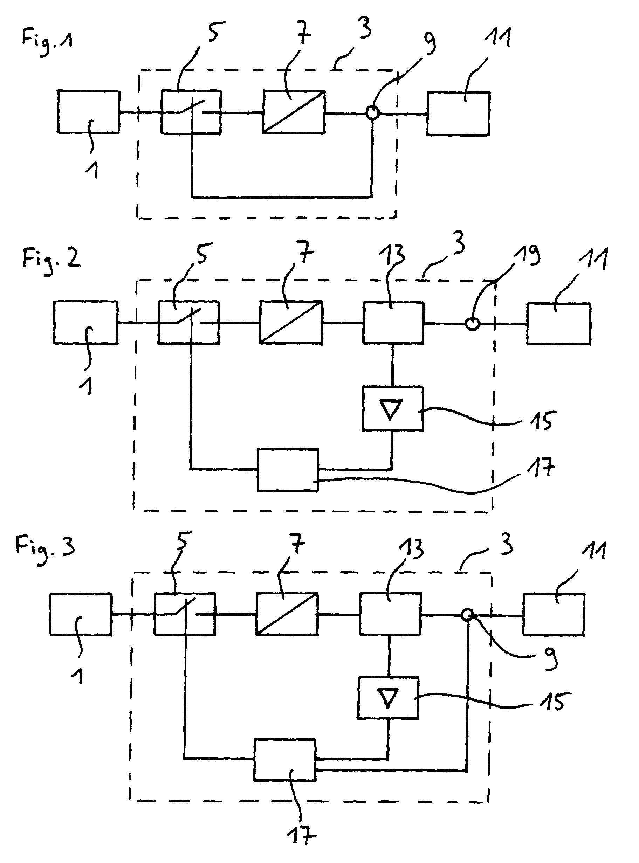

Gemäß dem ersten Ausführungsbeispiel nach Fig. 1 ist durch ein Spannungsversorgungsnetz 1 ein Ladegerät 3 gespeist. Am Eingang des Ladegerätes ist ein mechanischer Schalter 5 vorgesehen, der auf der Primärseite eines Spannungswandlers 7 des Ladegerätes angeordnet ist. Ausgangsseitig ist der Spannungswandler 7 mit federartig ausgebildeten an sich bekannten Ladekontakten 9 verbunden. Im Ruhezustand ist der Schalter 5 geöffnet und damit das Ladegerät 3 primärseitig vom Spannungsversorgungsnetz 1 getrennt. Dadurch ist sichergestellt, dass der Standby-Energieverbrauch 0 ist. Wird ein Mobilteil 11 mit einem Akkumulator bzw. ein Akkumulator auf die Ladekontakte 9 gesteckt oder auf diese aufgelegt, dann werden die Ladekontakte 9 entsprechend bewegt oder deformiert. Diese Bewegung wird auf den Schalter 5 übertragen und dieser mechanisch geschlossen und dadurch das Ladegerät 3 an die Versorgungsspannung gelegt; der Ladevorgang beginnt also automatisch. Durch das Entfernen des Mobilteils 11 von den Ladekontakten 9 des Ladegerätes 3 nach Beendigung des Ladevorganges kehren die Ladekontakte 9 in ihre Ausgangsform bzw. Ausgangslage zurück und der mechanische Schalter 5 wird wieder geöffnet; das Ladegerät 3 ist also wieder primärseitig vom Spannungsversorgungsnetz 1 getrennt.

In Abwandlung der Anordnung nach Fig. 1 weist die Anordnung gemäß dem zweiten Ausführungsbeispiel nach Fig. 2 einen Stromdetektor 13 mit einem nachgeschalteten Verstärker 15 und einer Auswertelogikschaltung 17 sowie starr ausgebildete Ladekontakte 19 auf. Der zwischen den Spannungswandler 7 und die Ladekontakte 19 geschaltete an sich bekannte Stromdetektor 13 erkennt am Vorhandensein der Akkumulatorspannung, wenn der Akkumulator 11 auf die Ladekontakte 19 gesetzt wird bzw. mit diesen kontaktiert wird. Über den Verstärker 15 wird das Detektorsignal der Auswertelogikschaltung 17 zugeführt. Wird das Vorhandensein des Mobilteils 11 bzw. des Akkumulators detektiert, dann schließt die Auswertelogikschaltung 17 den Schalter 5 und verbindet den Spannungswandler 7 mit der Netzspannung; der Ladevorgang kann beginnen. Am Ende des Ladevorganges detektiert der Stromdetektor 13 in Verbindung mit der Auswertelogikschaltung 17, wann der Akkumulator 11 ausreichend geladen ist und öffnet durch die Auswertelogikschaltung den Schalter 5, wodurch das Ladegerät 3 wieder primärseitig vom Spannungsversorgungsnetz 1 getrennt ist. Dabei sind der Stromdetektor 13 und der Verstärker 15 derart dimensioniert, dass auch das Aufsetzen eines tiefentladenen Akkumulators 11 mit geringer Akkumulatorspannung auf die Ladekontakte 19 möglichst sicher erkannt wird. Zusätzlich kann bei Bedarf eine Taste vorgesehen sein (nicht gezeigt), um den Schalter 5 in jedem Betriebsfall sicher schließen zu können.

Beim dritten Ausführungsbeispiel gemäß Fig. 3 weist das Ladegerät 3 sowohl die beweglichen Kontakte 9 gemäß Fig. 1 als auch den Stromdetektor 13 mit den dazugehörigen Schaltungselementen 15, 17 gemäß Fig. 2 auf. Dadurch sind die Vorteile der Anordnungen gemäß den ersten beiden Ausführungsbeispielen bei einem Ladegerät realisiert, und der Schalter 5 kann über die Auswertelogikschaltung 17 entsprechend gesteuert werden. Insbesondere werden aufgrund der beweglichen Ladekontakte 9 der Beginn des Ladevorganges und aufgrund des Stromdetektors 13 das Ende des Ladevorganges sicher erkannt und der Schalter 5 jeweils geeignet geschaltet.

## Patentansprüche

1. Anordnung mit einem elektrischen Ladegerät (3) und einem akkumulatorgepufferten Mobilteil (11), welches Ladegerät ein an einem Spannungsversorgungsnetz (1) liegendes und über einen Schalter (5) schaltbares Netzteil (7) sowie Ladekontakte (9; 19) aufweist, mit denen das Mobilteil zum Aufladen durch das Ladegerät kontaktierbar ist,
**dadurch gekennzeichnet,**
**dass** der Schalter (5) das Netzteil (7) des Ladegerätes im Ruhezustand primärseitig vom Spannungsversorgungsnetz (1) trennt, und dass das Mobilteil (11) durch das Kontaktieren der Ladekontakte (9; 19) des Ladegerätes den Schalter (5) schließt.

2. Anordnung nach Anspruch 1, **dadurch gekennzeichnet, dass** der Schalter als mechanischer Schalter (5) ausgebildet ist, dass die Ladekontakte des Ladegerätes beweglich ausgebildet sind, und dass das Mobilteil (11) beim Kontaktieren insbesondere durch sein Eigengewicht die Ladekontakte (9) bewegt und dadurch den mechanischen Schalter (5) schließt.

3. Anordnung nach Anspruch 1 oder 2, **dadurch gekennzeichnet, dass** das Ladegerät einen Stromdetektor (13) aufweist, der das Kontaktieren der Ladekontakte (9; 19) durch das Mobilteil detektiert und durch eine mit dem Stromdetektor verbundene Auswertelogikschaltung (17) den Schalter (5) schließt.

4. Anordnung nach Anspruch 3, **dadurch gekennzeichnet, dass** dem Stromdetektor (13) ein Verstärker (15) nachgeschaltet ist.

5. Anordnung nach Anspruch 3 oder 4, **dadurch gekennzeichnet, dass** der Stromdetektor (13) das zeitliche Ende des Ladevorganges detektiert und bei Beendigung des Ladevorganges den Schalter (5) öffnet.

6. Ladegerät für die Anordnung nach einem der vorhergehenden Ansprüche.
